# EUROPEAN PATENT APPLICATION

(11) **EP 4 797 673 A1**
(43) Date of publication of application: **26.08.2026**
(21) Application number: 26159201.8
(22) Date of filing: 18.02.2026
(51) Int. Cl.: H04N 1/00

(54) **IMAGE READING DEVICE, ABNORMALITY DETERMINATION PROGRAM, AND ABNORMALITY DETERMINATION METHOD**

(30) Priority: 20.02.2025 JP 2025026021
(71) Applicant: Seiko Epson Corporation, Tokyo 160-8801 (JP)
(72) Inventor: HIRAYAMA, Yuko, Suwa-shi 392-8502 (JP)
(74) Representative: Lewis Silkin LLP

(57) **Abstract**

The image reading device of the present disclosure includes a transport section a read section 5 that reads an image on the medium; a control section 6 that processes the read image 14 and that controls transport of the medium, wherein the control section performs an abnormality determination process on the abnormality determination region 13, which is set for the leading edge region of the read image of the medium. The abnormality determination process includes a first step that involves processing the pixels of the read data contained in the abnormality determination region into a state that allows distinction between pixels in an intra-medium region 20 and pixels in an extra-medium region 21, a second step that acquires the maximum distance WL from the center position in the medium width direction to the one edge 24, and the maximum distance WR to the other edge 25, and a third step that determines whether an abnormality exists in the transport state based on each of the maximum distances.

## Description

The present application is based on, and claims priority from JP Application Serial Number 2025-026021, filed February 20, 2025, the disclosure of which is hereby incorporated by reference herein in its entirety.

### BACKGROUND

### 1. Technical Field

The present disclosure relates to an image reading device that reads an image printed on a document. The present disclosure also relates to an abnormality determination program executed in the image reading device. The present disclosure also relates to an abnormality determination method in the image reading device.

### 2. Related Art

An example of the related art for this type of image reading device is disclosed in JP-A- 2021-34842.

JP-A- 2021-34842 discloses an image reading device having a document protection mechanism. This document discloses the following.

In the document image of an abnormality determination region, a distance WL from the center position in a medium width direction to the one edge of the medium in the medium width direction and a distance WR from the center position in the medium width direction to the other edge in the medium width direction are obtained, and a value R, which is a ratio of or difference between the distance WR and the distance WL, is compared with a predetermined threshold R0 to determine whether an abnormality is present.

However, when an image including a figure, a character, or the like appears in the region of the document image, there is a possibility that such an image may be mistakenly identified as an edge when obtaining the distances WL and WR from the center position to each edge, which may result in inaccurate determination of WL and WR.

### SUMMARY

To solve the above-described issue, an image reading device according to the present disclosure includes a transport section that transports a medium along a transport path; a read section that is provided in the transport path and that reads an image of the medium; and a control section that processes read data read by the read section and that controls transport of the medium in the transport path, wherein the control section is configured to set an abnormality determination region for a leading edge region of a read image of the medium and to perform an abnormality determination process on the abnormality determination region and the abnormality determination process includes a first step that involves processing pixels of the read data contained in the abnormality determination region into a state that allows distinction between pixels in an intra-medium region and pixels in an extra-medium region, a second step that, after the first step, acquires a maximum distance WL from a center position in a medium width direction, which intersects a medium transport direction, to one edge, and a maximum distance WR from the center position to an other edge, and a third step that involves comparing a value R with a predetermined threshold R1, the value R being either a ratio or a difference between the maximum distance WR and the maximum distance WL.

An abnormality determination program according to the present disclosure is executed in the image reading device having a transport section that transports a medium along a transport path, a read section that is provided in the transport path and that reads an image of the medium, and a control section that processes read data read by the read section and that controls transport of the medium in the transport path, the abnormality determination program is such as to set an abnormality determination region for a leading edge region of a read image of the medium and to perform an abnormality determination process on the abnormality determination region and the abnormality determination process includes a first step that involves processing pixels of the read data contained in the abnormality determination region into a state that allows distinction between pixels in an intra-medium region and pixels in an extra-medium region, a second step that, after the first step, acquires a maximum distance WL from a center position in a medium width direction, which intersects a medium transport direction, to one edge, and a maximum distance WR from the center position to an other edge, and a third step that involves comparing a value R with a predetermined threshold R1, the value R being either a ratio or a difference between the maximum distance WR and the maximum distance WL.

An abnormality determination method according to the present disclosure is in an image reading device having a transport section that transports a medium along a transport path; a read section that is provided in the transport path and that reads an image of the medium; and a control section that processes read data read by the read section and that controls transport of the medium in the transport path, wherein the abnormality determination method in the image reading device includes setting an abnormality determination region for a leading edge region of a read image of the medium and performing an abnormality determination process on the abnormality determination region, the abnormality determination process includes processing the pixels of the read data contained in the abnormality determination region into a state that allows distinction between pixels in an intra-medium region and pixels in an extra-medium region, acquiring the maximum distance WL from the center position in the medium width direction, which intersects the transport direction of the medium, to the one edge, and the maximum distance WR from the center position to the other edge, and comparing a value R with a predetermined threshold R1, the value R being either a ratio or a difference between the maximum distance WR and the maximum distance WL.

### BRIEF DESCRIPTION OF THE DRAWINGS

FIG. 1 is a schematic configuration diagram of an image reading device according to the present embodiment.
FIG. 2 is a block configuration of a control section according to the present embodiment.
FIG. 3 is a diagram illustrating image processing for an example of an abnormality determination region according to the present embodiment.
FIG. 4 is a diagram illustrating image processing for another example of an abnormality determination region according to the present embodiment.
FIG. 5 is a flowchart illustrating a control flow of an abnormality determination process mode of the present embodiment.
FIG. 6 is a diagram illustrating image processing for another example of an abnormality determination region according to the present embodiment.
FIG. 7 is a diagram illustrating image processing for another example of the abnormality determination region according to the present embodiment.
FIG. 8 is a diagram illustrating image processing for another example of an abnormality determination region according to the present embodiment.

### DESCRIPTION OF EMBODIMENTS

Hereinafter, the present disclosure will be briefly described.

To solve the above-described issue, an image reading device according to the first aspect of the present disclosure includes a transport section that transports a medium along a transport path, a read section that is provided in the transport path and that reads an image of the medium, and a control section that processes read data read by the read section and that controls transport of the medium in the transport path, wherein the control section is configured to set an abnormality determination region for a leading edge region of a read image of the medium and to perform an abnormality determination process on the abnormality determination region and the abnormality determination process a first step that involves processing pixels of the read data contained in the abnormality determination region into a state that allows distinction between pixels in an intra-medium region and pixels in an extra-medium region, a second step that, after the first step, acquires a maximum distance WL from a center position in a medium width direction, which intersects a medium transport direction, to one edge, and a maximum distance WR from the center position to an other edge, and a third step that involves comparing a value R with a predetermined threshold R1, the value R being either a ratio or a difference between the maximum distance WR and the maximum distance WL.

According to this aspect, the system is configured to process the pixels of the read data included in the abnormality determination region into a state in which pixels in an intra-medium region, defined based on the first and second edges, and pixels in a extra-medium region can be clearly distinguished. This process makes it possible to accurately search for the position of the boundary line between the inner portion and the outer portion of the medium region, and thus to accurately specify the positions of the one edge and the other edge. By this, the maximum distance WL from the center position to the one edge in the medium width direction and the maximum distance WR from the center position to the other edge can be accurately obtained.

An image reading device according to a second aspect of the present disclosure is an aspect according to the first aspect, wherein an edge identification step that performs a binarization process on pixels of the read data within the abnormality determination region and that identifies the one edge and the other edge, wherein the first step defines, based on the one edge and the other edge identified in the edge identification step, an intra-medium region and an extra-medium region within the abnormality determination region.

According to the present aspect, it further includes an edge identification step that identifies the one edge and the other edge, wherein the first step defines, based on the one edge and the other edge identified in the edge identification step, an intra-medium region and an extra-medium region within the abnormality determination region. By this, it becomes possible to easily determine an intra-medium region and a extra-medium region within the abnormality determination region.

An image reading device according to a third aspect of the present disclosure is an aspect according to the second aspect, wherein the edge identification step performs the binarization process in the abnormality determination region by assigning a first color to read data pixels whose luminance difference is equal to or greater than a threshold R2 and a second color to pixels whose luminance difference is less than the threshold R2.

According to the present aspect, the pixels within the abnormality determination region are subjected to the binarization process based on luminance difference, so that the pixels can be divided into a portion of a first color and a portion of a second color, thereby facilitating subsequent image processing.

An image reading device according to a fourth aspect of the present disclosure is an aspect according to the third aspect, wherein after binarization, the first step enables distinction by performing a color unification process in which all pixels between the one edge and the other edge in the abnormality determination region are set to the first color.

According to the present aspect, the first step performs, after the binarization process, a color unification process in the abnormality determination region to make all pixels between the one edge and the other edge a first color. By this, it possible to easily realize a state in which pixels in an intra-medium region and pixels in a extra-medium region can be clearly distinguished from each other.

An image reading device according to a fifth aspect of the present disclosure is an aspect according to the third aspect, wherein before the binarization process, the pixels in the abnormality determination region are set to the second color.

Note that the present aspect can also be according to the fourth aspect.

According to the present aspect, before the first step, the pixels in the abnormality determination region are set to the second color. By this, the risk of erroneous edge detection caused by noise such as dust or vertical streaks can be reduced when searching for and identifying the positions of the one edge and the other edge.

An image reading device according to a sixth aspect of the present disclosure is an aspect according to the fourth aspect, wherein after the color unification process, if either the one edge or the other edge includes a separated edge that is located away from the downstream edge in the transport direction of the abnormality determination region, a second-stage color unification process is performed in which all pixels in the abnormality determination region that are between the separated edge and one side portion in the direction intersecting the transport direction are set to the first color.

Note that the present aspect can also be according to the fifth aspect.

According to the present aspect, when one edge and the other edge include a separated edge located away from the downstream edge of the abnormality determination region, the image reading device is configured to perform a second-stage color unification process in which all pixels between the separated edge and a side edge of the abnormality determination region on one side are set to the first color. By this, it is possible to accommodate a transport posture in a state where either the left or right edges of the medium is not in the abnormality determination region.

An image reading device according to a seventh aspect of the present disclosure is an aspect according to the third aspect, wherein the abnormality determination process, when the medium is thin sheet paper, after the binarization process in the abnormality determination region, identifies the leading edge of the medium in the resulting image, forms the one edge and the other edge at the respective both end positions of the leading edge, and in the first step, achieves distinction by performing a color unification process in the abnormality determination region, in which all pixels between the formed the one edge and the other edge are set to the first color.

Since the read section irradiates light from upstream to downstream, or from downstream to upstream in the transport direction of the medium, the leading edge and trailing edge of the medium exhibit high contrast, making edge extraction easier. However, the contrast of the side edge of the medium is difficult to obtain, and the edge tends to be difficult to extract. This tendency depends on the degree of translucency of the translucent medium. In the present specification, the term "thin sheet paper" refers to a medium in which the above-mentioned tendency is strong, making it difficult to extract the edge of the side portion of the medium.

Note that the present aspect can also be according to the fifth aspect.

According to the present aspect, one edge and the other edge are created within the abnormality determination region based on both end positions of the leading edge, and the device is configured to perform a color unification process in which all pixels between the created one edge and the other edge are set to the first color. By this, it possible to deal with even the thin sheet paper, and to accurately obtain the maximum distance WL and the maximum distance WR.

A non-transitory computer-readable storage medium storing a program, the program including an abnormality determination program according to an eighth aspect of the present disclosure, which is executed in an image reading device, the image reading device includes a transport section that transports a medium along a transport path, a read section that is provided in the transport path and that reads an image of the medium, and a control section that processes read data read by the read section and that controls transport of the medium in the transport path, wherein the abnormality determination program executes to set an abnormality determination region for a leading edge region of a read image of the medium and to perform an abnormality determination process on the abnormality determination region and the abnormality determination process includes a first step that involves processing pixels of the read data contained in the abnormality determination region into a state that allows distinction between pixels in an intra-medium region and pixels in an extra-medium region, a second step that, after the first step, acquires a maximum distance WL from a center position in a medium width direction, which intersects a medium transport direction, to one edge, and a maximum distance WR from the center position to an other edge, and a third step that involves comparing a value R with a predetermined threshold R1, the value R being either a ratio or a difference between the maximum distance WR and the maximum distance WL.

According to the present aspect, the same effect as that of the first aspect can be obtained.

An abnormality determination method, according to an eighth aspect of the present disclosure is a method for determining abnormalities in the image reading device having a transport section that transports a medium along a transport path, a read section that is provided in the transport path and that reads an image of the medium, and a control section that processes read data read by the read section and that controls transport of the medium in the transport path, the abnormality determination method includes to set an abnormality determination region for a leading edge region of a read image of the medium and to perform an abnormality determination process on the abnormality determination region and the abnormality determination process includes processing the pixels of the read data contained in the abnormality determination region into a state that allows distinction between pixels in an intra-medium region and pixels in an extra-medium region, acquiring the maximum distance WL from the center position in the medium width direction, which intersects the transport direction of the medium, to the one edge, and the maximum distance WR from the center position to the other edge, and comparing a value R, defined as either the ratio or the difference between the maximum distance WR and the maximum distance WL, with a predetermined threshold R1.

According to the present aspect, the same effect as that of the first aspect can be obtained.

### EMBODIMENT

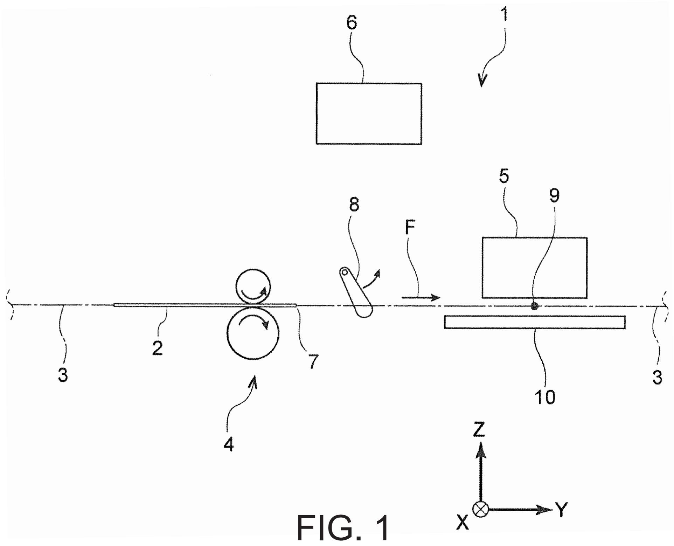

Hereinafter, an image reading device according to an embodiment of the present disclosure will be described in detail with reference to FIGS. 1 to 8.

In the following description, three axes orthogonal to each other are referred to as an X-axis, a Y-axis, and a Z-axis, respectively, as illustrated in each drawing. The direction indicated by the arrows of the three axes (X, Y, and Z) is the +direction of each direction, and the opposite direction is the -direction. The Z-axis direction corresponds to a vertical direction, that is, a direction in which gravity acts, a +Z direction indicates a vertically upward direction, and a -Z direction indicates a vertically downward direction. The X-axis direction and the Y-axis direction correspond to horizontal directions. The +Y direction indicates the front direction of the image reading device, and the -Y direction indicates the rear direction of the image reading device. The +X direction indicates the right direction of the image reading device, and the -X direction indicates the left direction of the image reading device.

### EMBODIMENT

### Overall schematic description of image reading device

An image reading device 1 of the present embodiment is a scanner as an example.

As illustrated in FIG. 1, the image reading device 1 includes a transport section 4 that transports a medium 2, which is a document, in a transport direction F along a transport path 3, a read section 5 that is provided on the transport path 3 and reads an image on the medium 2, and a control section 6 that processes read data read by the read section 5 and controls transport of the medium 2 on the transport path 3.

The transport section 4 is a transport roller that is driven by rotational power transmitted from a motor (not illustrated) and applies a transporting force to the medium 2 in the transport direction F. In the present embodiment, only the one located upstream of and adjacent to the read section 5 is illustrated, and the others are not illustrated. That is, a plurality of transport rollers are arranged in the transport path 3 along the transport direction F from a medium placement section (not illustrated) on which is set the medium 2 to be read by the read section 5. A plurality of transport rollers (not illustrated) are also arranged on the transport path 3 downstream of the read section 5.

The transport rollers of the transport section 4 are arranged in pairs symmetrically with respect to a center position CL in the medium width direction (X-axis direction). That is, in the present embodiment, the center position CL is a reference position of the medium to be transported, and the medium having a different width size is also transported in the reading region of the read section 5 in a state where the center position CL is not changed.

The read section 5 includes a contact image sensor module (CISM). The read section 5 irradiates the reading position 9 with light and receives reflection light from the transported medium 2, thereby reading an image of the medium 2 passing through the reading position 9 in the transport direction F. The reading position 9 is long in the width direction (X-axis direction) of the medium 2, and thus can be referred to as a reading line.

A leading edge detection section 8 that detects passage of a leading edge 7 of the medium 2 is arranged upstream of the read section 5. The leading edge detection section 8 grasps the position of the leading edge 7 by a lever that pivots with the passage of the leading edge 7 of the medium 2. The read section 5 executes a reading operation based on the position information of the leading edge 7 of the medium 2 detected by the leading edge detection section 8. In FIG. 1, reference numeral 10 denotes a glass document base that supports the medium 2 when reading. The document base is a support section including a background plate and the like.

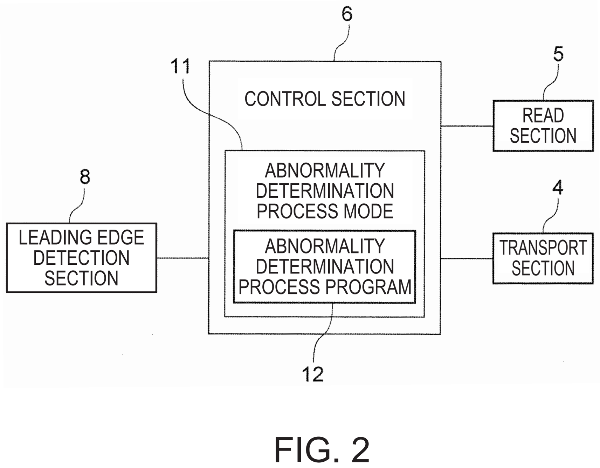

As illustrated in FIG. 2, the control section 6 receives the position information of the leading edge 7 of the medium 2 and other sensing information from the leading edge detection section 8, and performs control to execute each operation including a reading operation by the read section 5, a transport operation of the medium 2 by the transport section 4, and an operation of other drive sections (not illustrated).

The control section 6 can execute an abnormality determination process mode 11 in which an abnormality determination process (to be described later) is performed. The abnormality determination process mode 11 executes an abnormality determination process based on the abnormality determination process program 12. This process is always performed when the medium 2 is read. In other words, the present process may be performed when the medium 2 is not limited to thin sheet paper or thick sheet paper, and any medium may be read. This process may be performed when the medium 2 is thin sheet paper.

The control section 6 includes a CPU, a flash ROM, and a RAM. The CPU performs various calculation processes according to various programs such as an abnormality determination process program 12 stored in the flash ROM, and controls the operation of the entire image reading device 1. The flash ROM, which is an example of the storage section, is a nonvolatile memory that can be read from or written into. The RAM, which is an example of a storage section, is used as a work region of the CPU, and temporarily stores various types of information.

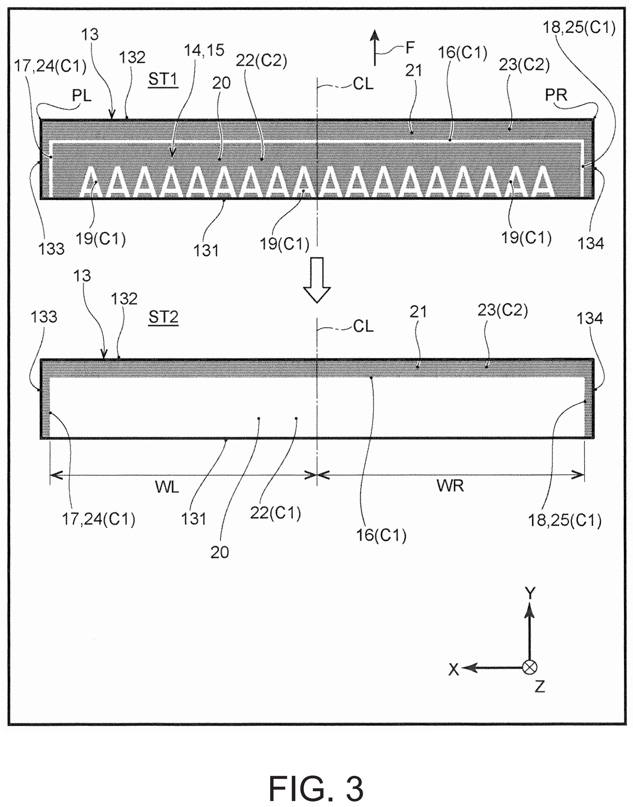

As illustrated in FIG. 3, the abnormality determination process mode 11 of the control section 6 is configured to set an abnormality determination region 13 for a leading edge region of the read image of the medium 2 and to perform the abnormality determination process on the abnormality determination region 13.

In the present embodiment, the abnormality determination region 13 is a region surrounded by a horizontally long rectangle having an upstream edge 131 on the upstream side in the transport direction F, a downstream edge 132 on the downstream side, one of either a left and a right side edge 133, and the other side edge 134. The abnormality determination region 13 includes a read image 14 of the leading edge region of the medium 2, that is, an image corresponding to the read data. The read image 14 is an image read until the predetermined time T elapses after the leading edge of the transported medium 2 passes through the reading position 9. The predetermined time T is a length of time required to acquire image data necessary for performing abnormality determination, and is set in advance.

Although the four sides of the upstream edge 131, the downstream edge 132, the one side edge 133, and the other side edge 134 forming the abnormality determination region 13 are illustrated in a state of being visible as lines in FIG. 3, this is for indicating the range of the abnormality determination region 13, and each line of the four sides does not exist as an image. In particular, in the states ST1 and ST2 of FIG. 3, the four sides of the upstream edge 131, the downstream edge 132, the one side edge 133, and the other side edge 134 are not present in a visible state.

FIG. 3 illustrates a case where the medium 2 is transported in a state where there is no abnormality such as skew.

The state ST1 in FIG. 3 is illustrated in a state of a binary image 15 obtained by binarizing the read image 14 in the abnormality determination region 13.

The binary image 15 is obtained by setting pixels of a portion of the read image 14 in which the luminance difference is equal to or greater than the threshold R2 in the abnormality determination region 13 to a first color C1, which is "white" in the drawing, and setting pixels of a portion of the read image 14 in which the luminance difference is less than the threshold R2 to a second color C2, which is "black" in the drawing. The threshold R2 is set in advance so that the first color C1 and the second color C2 can be clearly distinguished from each other.

In the present embodiment, all the pixels in the abnormality determination region 13 are set to the second color C2, and in this state, the read image 14 is captured in the abnormality determination region 13 and the binarization process is performed.

In the binarization based on the luminance difference, for example, when the medium 2 is white paper sheet and an image including characters, figures, and the like are written in black or red on the paper sheet, the luminance difference becomes large at the leading edge position or the side edge of the medium 2 and further at the boundary portion of the image including characters, figures, and the like in the medium 2, that is, the luminance difference becomes equal to or larger than the threshold R2. On the other hand, in the white portion where no character or the like is written in the medium 2, there is almost no luminance difference, and thus the luminance difference is less than the threshold R2. Therefore, as illustrated in state ST1 of FIG. 3, a position of a leading edge 16 of the medium 2, each position of one side edge 17 and the other side edge 18 in the width direction, and the portions corresponding to an image 19 including characters, figures, and the like are set to the first color C1, "white," and the other portions are set to the second color C2, "black."

The image of the character "A" illustrated as an example of the image 19 including characters, figures, and the like is illustrated here as an image having a clear outline. However, in reality, the outline is not so clear, and the image is likely to be one in which adjacent characters "A" and "A" are in a connected state.

In the present embodiment, the abnormality determination process mode 11 of the control section 6 executes the edge identification step on the binary image 15 illustrated in the state ST1 of FIG. 3.

The edge identification step is a process of identifying one edge 24 and the other edge 25 in the medium width direction (X-axis direction), which is a direction intersecting the transport direction F of the medium 2, in the abnormality determination region 13 with respect to the binary image 15 obtained by binarizing the read image 14 included in the abnormality determination region 13.

### Edge identification step: for one edge

Identification of the one edge 24 is performed as follows.
(1) In the binary image 15 of state ST1 in FIG. 3, the first color C1 is searched for by moving the checking position from the corner position PL, which is located at the downstream edge 132 of the abnormality determination region 13 and at the one side edge 133 forming the left side, toward the center position CL in the right direction (-X direction), while checking color pixel by pixel. If the first color C1 is detected, the detected position is defined as the position of the one edge 24. If the first color C1 is not detected even after moving to the center position CL, it is determined that one of edges does not exist at that position.
(2) Subsequently, the position to be searched is moved by one pixel toward the upstream edge 131 (-Y direction), and the same search as in (1) is performed.
(3) Further, the position to be searched is moved by one pixel toward the upstream edge 131 (-Y direction), and the same search as in (1) is performed.
(4) Steps (2) and (3) are repeated over the entire length of one side edge 133 of the abnormality determination region 13 to specify the entire position of the one edge 24 in the abnormality determination region 13.

By this, the position of the entire one edge 24 in the abnormality determination region 13 is specified.

### Edge identification step: for the other edge

Identification of the other edge 25 is as follows.
(1) In the binary image 15 of state ST1 in FIG. 3, the first color C1 is searched for by moving the checking position from the corner position PR, located at the downstream edge 132 of the abnormality determination region 13 and at the other side edge 134 forming the right side, toward the center position CL in the left direction (+X direction), while checking the color pixel by pixel. If the first color C1 is detected, the detected position is defined as the position of the other edge 25. If the first color C1 is not detected even after moving to the center position CL, it is determined that the other edge 25 does not exist at that position.
(2) Subsequently, the position to be searched is moved by one pixel toward the upstream edge 131 (-Y direction), and the same search as in (1) is performed.
(3) Further, the position to be searched is moved by one pixel toward the upstream edge 131 (-Y direction), and the same search as in (1) is performed.
(4) Steps (2) and (3) are repeated over the entire length of the other side edge 134 of the abnormality determination region 13 to specify the entire position of the other edge 25 in the abnormality determination region 13.

By this, the position of the entire other edge 25 in the abnormality determination region 13 is specified.

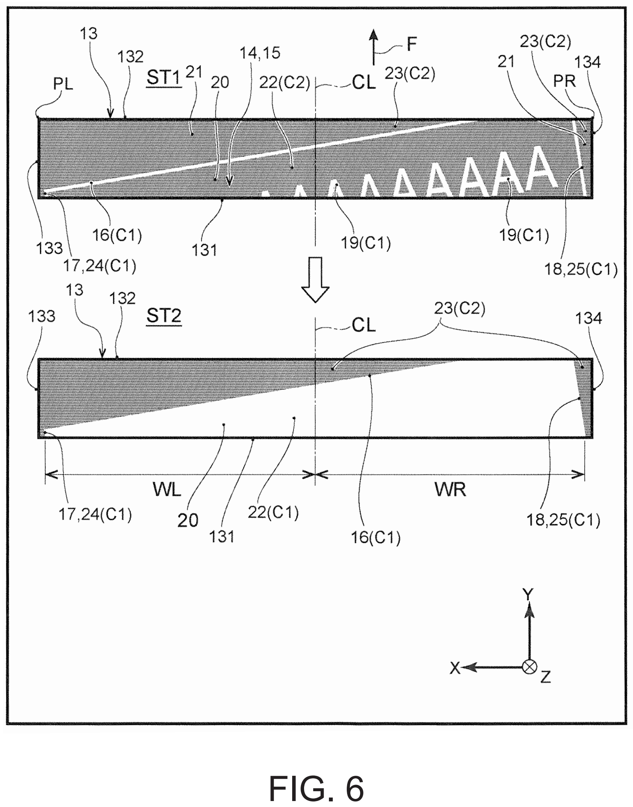

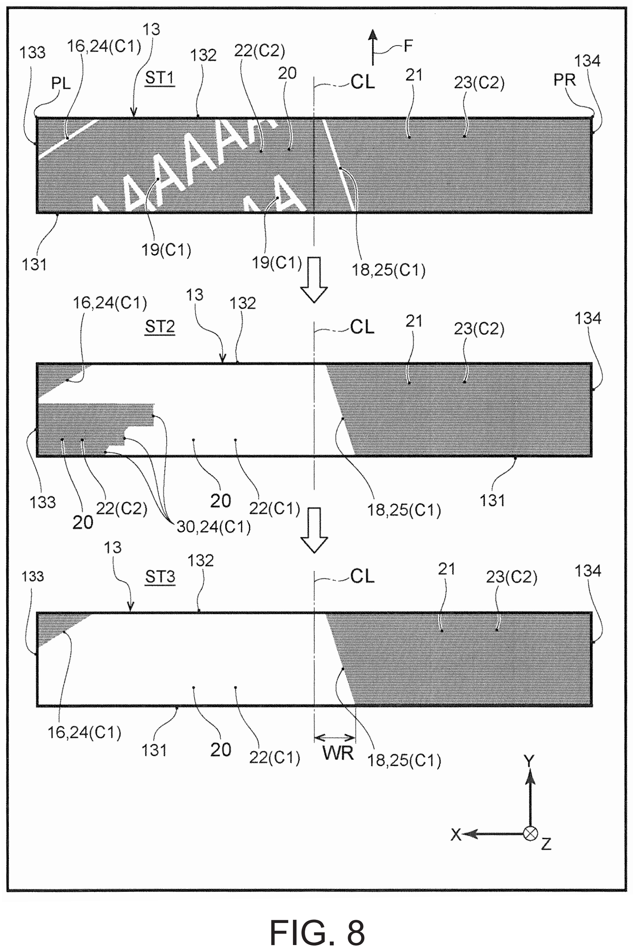

The one edge 24 and the other edge 25 specified by the edge identification step means the positions of the one side edge 17 and of the other side edge 18 in the width direction of the medium 2 when the medium 2 is transported in a state where, as illustrated in FIG. 3, there is no abnormality such as skew. However, as described later (FIGS. 6 and 8), when the degree of skew or the like of the medium 2 increases, a part or the whole of either the one edge 24 and the other edge 25 may become the leading edge 16 of the medium 2.

In either case, an intra-medium region 20 and an extra-medium region 21 can be defined by specifying the positions of the one edge 24 and the other edge 25 within the abnormality determination region 13.

In FIG. 3, the region between the one edge 24 and the other edge 25 corresponds to the intra-medium region 20. That is, since the position of the straight line connecting the most downstream position of the one edge 24 in the transport direction F and the most downstream position of the other edge 25 in the transport direction F corresponds to the position of the leading edge 16, the region surrounded by the one edge 24, the other edge 25, and the leading edge 16 constitutes the intra-medium region 20 within the abnormality determination region 13.

In the present embodiment, the abnormality determination process mode 11 processes the pixels of the read data included in the abnormality determination region 13 into a state in which pixels in the intra-medium region 20 and pixels in the extra-medium region 21 can be distinguished from each other as a first step of the abnormality determination process.

The state ST2 in FIG. 3 represents a state in which the first step of processing state ST1 in FIG. 3 is performed so that a pixel 22 in the intra-medium region 20 and a pixel 23 in the extra-medium region 21 can be distinguished from each other. In state ST1 of FIG. 3, the intra-medium region 20 contains portions of the pixels 22 in both the first color C1 and the second color C2.

That is, the first step is configured to perform a color unification process on the binary image 15 after the binarization process, by setting all pixels 22 in the intra-medium region 20, which is the region between the one edge 24 and the other edge 25, to the first color C1 within the abnormality determination region 13. By this color unification process, state ST1 in FIG. 3 is changed to state ST2 in FIG. 3, and pixels in the intra-medium region 20 and the pixels 22 in the extra-medium region 21 can be distinguished from each other.

In the present embodiment, in the abnormality determination process mode 11, the second step is executed after the first step. The second step is a process of acquiring the maximum distance WL from the center position CL to the one edge 24 and the maximum distance WR from the center position CL to the other edge 25 in the medium width direction (X-axis direction), which is a direction intersecting the transport direction F of the medium 2. The process of acquiring the maximum distance WL and the maximum distance WR will be described later.

In the abnormality determination process mode 11, the third step is executed following the second step. In the third step, a value R, which is a ratio or difference between the maximum distance WR and the maximum distance WL obtained in the second step, is compared with a predetermined threshold R1. By this comparison, it is determined whether or not the transport state of the medium 2 is abnormal. That is, when the value R is larger than the threshold R1, transport is determined as "abnormal", and the transport of the medium 2 is stopped. If the value R is less than the threshold R1, transport is determined to be "normal" and transport of the medium 2 is continued.

### Acquisition of maximum distance WL

In the process of acquiring the maximum distance WL, in state ST2 of FIG. 3, the second color C2 is searched for by moving the checking position leftward (+X direction) from the center position CL toward the left side edge 133 along the upstream edge 131 of the abnormality determination region 13, while checking the color of each pixel. The position where the second color is detected is defined as the position of the one edge 24, and the maximum distance WL is thereby obtained. In FIG. 3, since the one edge 24 is the position of the one side edge 17 of the medium 2, the maximum distance WL is the distance from the center position CL to the one side edge 17 of the medium 2.

### Acquisition of maximum distance WR

The process of acquiring the maximum distance WR involves searching for the second color C2 by moving the checking position rightward (-X direction) from the center position CL toward the other side edge 134 along the upstream edge 131 of the abnormality determination region 13, while checking the color of each pixel, in state ST of FIG. 3. The position where the second color is detected is the position of the other edge 25, and the maximum distance WR is thereby acquired. In FIG. 3, the other edge 25 is the position of the other side edge 18 of the medium 2, and thus the maximum distance WR is the distance from the center position CL to the other side edge 18 of the medium 2.

### In the case where the medium is thin sheet paper

Since the read section 5 emits light from upstream to downstream or from downstream to upstream in the transport direction F of the medium 2, the contrast is easily obtained at the leading edge 16 and the trailing edge of the medium 2, and the edge is easily extracted. However, the contrast of the side edges 17 and 18 of the medium 2 is difficult to obtain, and the edge tends to be difficult to extract. This tendency is likely to occur when the medium 2 has translucency, and depends on the degree of translucency. In the present specification, "thin sheet paper" refers to the medium 2 that exhibits the above tendency strongly and for which it is difficult to extract the side edges 17 and 18.

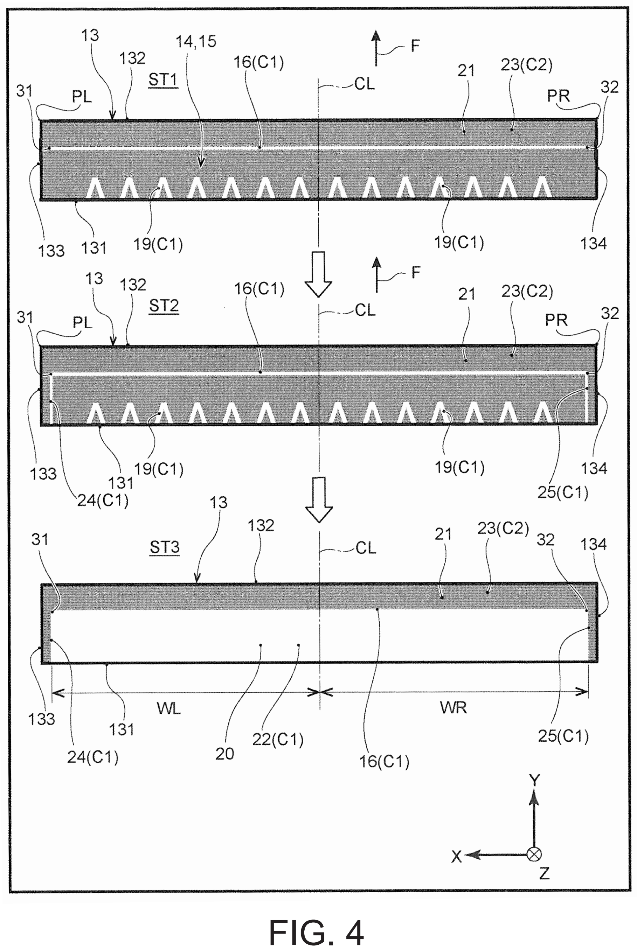

The state ST1 in FIG. 4 is illustrated in a state of a binary image 15 obtained by binarizing the read image 14 in the abnormality determination region 13. Since the medium 2 is thin sheet paper, the one edge 24 and the other edge 25 are not extracted.

In the abnormality determination process mode 11, when the medium 2 is thin sheet paper, the leading edge 16 of the medium 2 is specified in the binary image 15 within the abnormality determination region 13. Furthermore, processing is performed to form the one edge 24 and the other edge 25 at both end positions 31 and 32 of the leading edge 16. The one edge 24 and the other edge 25 are formed in a direction perpendicular to the longitudinal direction of the leading edge 16. The ST2 of FIG. 4 illustrates a state in which a process of forming the one edge 24 and the other edge 25 is performed. That is, the portions of the one edge 24 and the other edge 25 are changed to the first color C1.

Then, in the first step, the color unification process is performed to convert all the pixels between the one edge 24 and the other edge 25 into the first color C1 in the abnormality determination region 13. As a result of this color unification process, the pixels in the intra-medium region 20 and the pixels in the extra-medium region 21 are placed in a state in which they can be distinguished, as illustrated in state ST3 of FIG. 4.

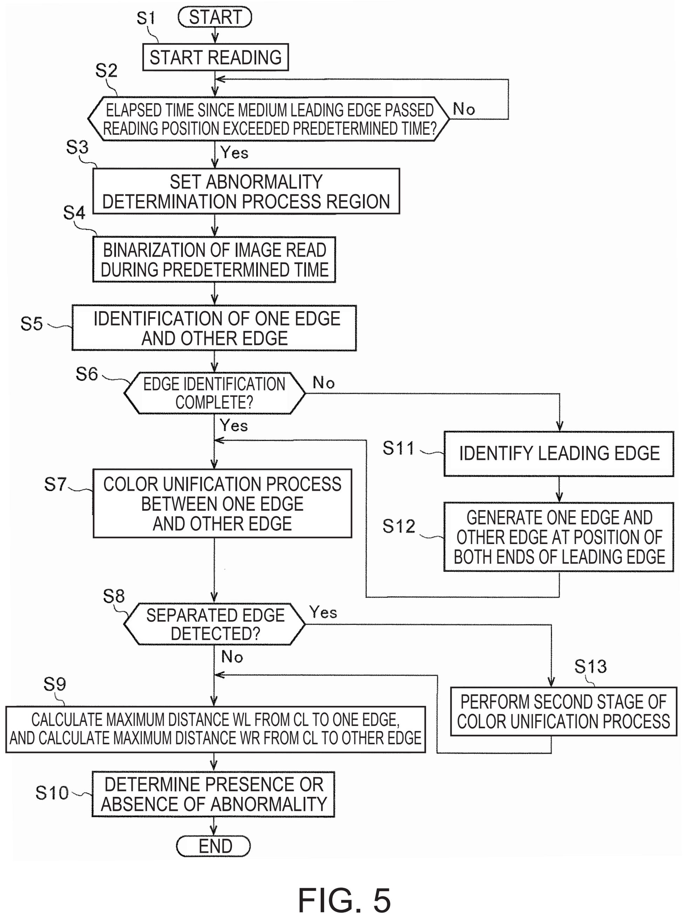

Next, a flow of control of the abnormality determination process in the abnormality determination process mode 11 will be described with reference to FIG. 5. The abnormality determination process mode 11 executes control based on an abnormality determination process program 12.

First, at step S1, the read section 5 starts reading the medium 2, which is transported in the transport direction F along the transport path 3 by the transport section 4.

Subsequently, the process proceeds to step S2, where it is determined whether or not a predetermined time T has elapsed since the transported medium 2 passed through the reading position 9 of the read section 5. If the predetermined time T has elapsed (Yes), it proceeds to step S3.

In step S3, the abnormality determination region 13 is set.

Subsequently, the process proceeds to step S4, and the read image 14 read by the read section 5 within the predetermined time T is binarized to obtain the binary image 15. The state ST1 in FIG. 3 and the state ST1 in FIG. 4 are the states as described above.

Subsequently, in step S5, the one edge 24 and the other edge 25 are specified. Specifically, the process in the edge identification step is executed. The process proceeds to step S6, and it is determined whether or not the one edge 24 and the other edge 25 can be specified. Here, for example, when the medium 2 is thin sheet paper, it may be difficult to specify the one edge 24 and the other edge 25 as described above. Then, if the edge can be specified (Yes), the process proceeds to step S7.

In step S7, a color unification process is performed to set all pixels in the intra-medium region 20, which is a region between the one edge 24 and the other edge 25, to the first color C1. Through this color unification process, the state ST1 in FIG. 3 is changed to the state ST2 in FIG. 3, and the pixels in the intra-medium region 20 and the pixels in the extra-medium region 21 are changed to an identifiable state. That is, the first step described above is executed.

Subsequently, the process moves to step S8. Following the color unification process, the presence of a separated edge 30 is checked. The separated edge 30 will be described later. If there is no separated edge 30 (No), the process proceeds to step S9.

In step S9, the maximum distance WL and the maximum distance WR are obtained by executing a process of acquiring maximum distance WL and the maximum distance WR. That is, the second step described above is executed.

Subsequently, the process moves to step S10, where the third step described above is executed, and it is determined whether an abnormality exists in the transport state of the medium 2. In the case of FIG. 3, the value R is less than the threshold R1, and the state is determined to be "normal".

If the edge cannot be specified in step S6 (No), the process proceeds to step S11.

In step S11, a process of identifying the leading edge 16 of the medium 2 in the binary image 15 in the abnormality determination region 13 is performed. That is, the position of the leading edge 16 is specified.

Subsequently, the process proceeds to step S12, and a process of forming the one edge 24 and the other edge 25 at both end positions 31 and 32 of the leading edge 16 is performed. The state ST2 in FIG. 4 is this state as described above.

Then, the process proceeds to step S7. The description of the subsequent control flow is the same as above, and thus is omitted. In the case of FIG. 4, the value R is less than the threshold R1, and the state is determined to be "normal".

### First abnormality determination example

Next, a case where the abnormality determination process mode 11 determines that the transport state of the medium 2 is "abnormal" will be described with reference to FIGS. 6 to 8.

First, the first abnormality determination example will be described with reference to FIG. 6.

FIG. 6 illustrates a case where the medium 2 is skewed during the transport. Specifically, this is a case where the medium 2 is transported while skewed to the left side.

The state ST1 in FIG. 6 is illustrated in a state of the binary image 15 obtained by binarizing the read image 14 in the abnormality determination region 13. That is, the state ST1 in FIG. 6 was obtained by binarizing the read image 14 in a state where the medium 2 is transported while skewed to the left side and where a part of the right side of the leading edge 16 of the medium 2 passed through the downstream edge 132 of the abnormality determination region 13.

A state ST2 in FIG. 6 illustrates a state in which the first step of the color unification process (step S7 in FIG. 5) was performed on the binary image 15. FIG. 6 is different from FIG. 3 only in that the medium 2 is transported in a skewed manner, and is the same as FIG. 3 in other respects, and therefore, the description of the same parts will be omitted.

By performing the processing of the second step and the third step on the image of the state ST2 in FIG. 6, the presence or absence of an abnormality in the transport state of the medium 2 is determined (step S9 and step S10 in FIG. 5.) In the case of FIG. 6, the maximum distance WR is greater than the maximum distance WL due to the skew, and thus the value R is greater than or equal to the threshold R1, and the determination is "abnormal".

### Second abnormality determination example

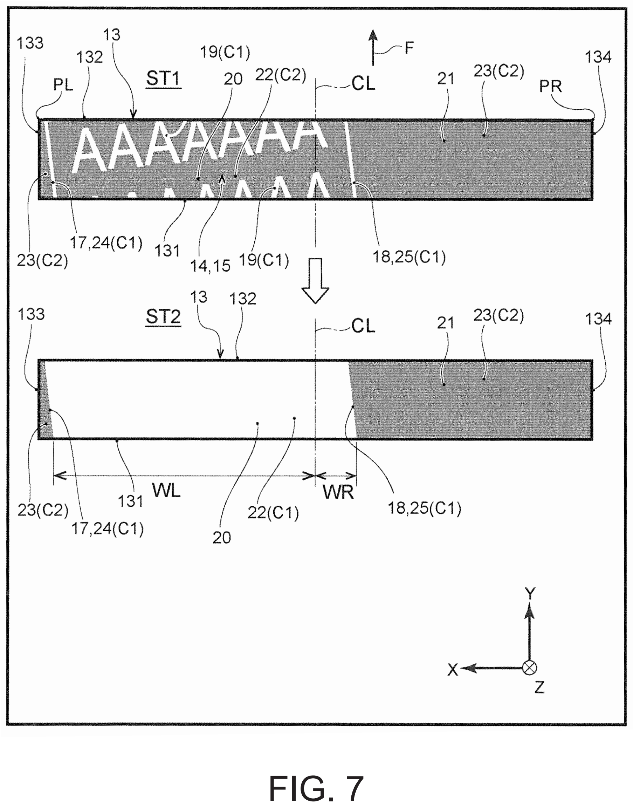

Next, a second abnormality determination example will be described with reference to FIG. 7.

FIG. 7 illustrates a case where the medium 2 having a small width is transported while skewed to the left side at a position on the transport path 3 close to the left side.

When the medium 2 is transported with the center position CL as the reference position described above, both side edges of the medium 2 are guided by an edge guide (not illustrated), and the medium 2 is usually arranged symmetrically with respect to the center position CL and starts to be transported, and thus the state of FIG. 7 is unlikely to be obtained. However, when the medium 2 is transported in a state where the edge guide is not used, the state of FIG. 7 may occur.

The state ST1 in FIG. 7 is illustrated as a state of the binary image 15 obtained by binarizing the read image 14 in a state where the medium 2 is transported with the position on the left side skewed to the left side and the leading edge 16 passes through the downstream edge 132 of the abnormality determination region 13.

A state ST2 in FIG. 7 illustrates a state in which the color unification process (step S7 in FIG. 5) of the first step was performed on the binary image 15. FIG. 7 is different from FIG. 3 only in that the medium 2 having a small width is transported in a skewed manner and the leading edge 16 passes through the downstream edge 132 of the abnormality determination region 13, and is the same as FIG. 3 in other points, and thus, the description of the same portions will be omitted.

By performing the processing of the second step and the third step on the image of the state ST2 in FIG. 7, the presence or absence of an abnormality in the transport state of the medium 2 is determined (step S9 and step S10 in FIG. 5). In the case of FIG. 7, the maximum distance WR is considerably smaller than the maximum distance WL, and therefore the value R is equal to or larger than the threshold R1, and the determination is "abnormal".

### Third abnormality determination example

Next, an third abnormality determination example will be described with reference to FIG. 8.

FIG. 8 illustrates a case where the medium 2 having a small width is transported while skewed to the left side at a position on the transport path 3 closer to the left side than in the case of FIG. 7.

In the state ST1 in FIG. 8, the medium 2 is transported with the position on the left side greatly skewed to the left side, and a part of the right side of the leading edge 16 passes through the downstream edge 132 of the abnormality determination region 13. Furthermore, the state is such that a portion of the left side of the leading edge 16 of the medium 2 and one of its side edges 17 are positioned outside one side edge 133 of the abnormality determination region 13. That is, the state ST1 in FIG. 8 is illustrated in a state of the binary image 15 obtained by binarizing the read image 14 in this state.

A state ST2 in FIG. 8 illustrates a state in which the color unification process (step S7 in FIG. 5) of the first step is performed on the binary image 15. In this example, the one side edge 17 of the medium 2 does not exist in the abnormality determination region 13. Therefore, the one edge 24 specified in the edge identification step is formed of a set of the leading edge 16, and the separated edge 30 corresponding to a portion corresponding to the image 19 including characters, figures, and the like and located on the leftmost side. The separated edge 30 is located away from the downstream edge 132 of the abnormality determination region 13. As illustrated in the state ST2 of FIG. 8, the pixels 22 in the intra-medium region 20 are not entirely converted to the first color C1 during the color unification process during step S7.

Therefore, when the separated edge 30 is present (step S8 in FIG. 5), the second stage color unification process is executed. That is, the second stage color unification process is executed to set all the pixels 22 between the separated edge 30 and the one side edge 133 of the abnormality determination region 13 to the first color C1. Step S13 in the flowchart of FIG. 5 corresponds to this.

As illustrated in state ST3 of FIG. 8, all pixels 22 within the intra-medium region 20 have been processed to the first color C1 through the second-stage color unification process.

By performing the process of the second step and the third step on the image of the state ST3 in FIG. 8, the presence or absence of an abnormality in the transport state of the medium 2 is determined (step S9 and step S10 in FIG. 5). In the case of FIG. 8, the maximum distance WL is too large to be determined, and the maximum distance WR is too small, so that the value R is equal to or larger than the threshold R1, and the determination is "abnormal".

### Description of effects of first embodiment

(1) In the present embodiment, the read pixels 14 included in the abnormality determination region 13 are configured to be in a state that is processed so as to enable distinction between the pixels 22 located within the intra-medium region 20, which is defined based on the one edge 24 and the other edge 25, and the pixels 23 located in the extra-medium region 21. This process makes it possible to accurately search for the position of the boundary line between inside the medium region and outside the medium region, and thus to accurately specify the positions of the one edge 24 and the other edge 25. By this, the maximum distance WL from the center position CL to the one edge 24 in the medium width direction (X-axis direction) and the maximum distance WR from the center position CL to the other edge 25 can be accurately obtained.
(2) In the present embodiment, the edge identification step of identifying the one edge 24 and the other edge 25 is provided, and the first step is configured to determine the intra-medium region 20 and the extra-medium region 21 in the abnormality determination region 13 based on the one edge 24 and the other edge 25 identified in the edge identification step. By this, it possible to easily define the intra-medium region 20 and the extra-medium region 21 in the abnormality determination region 13.
(3) In the present embodiment, the pixels in the abnormality determination region 13 are separated into the first color C1 portion and the second color C2 portion by the binarization process based on the luminance difference, and thus the subsequent image processing is facilitated.
(4) In the present embodiment, the first step performs the color unification process of setting all the pixels between the one edge 24 and the other edge 25 to the first color C1 in the abnormality determination region 13 after the binarization process of step S4. By this, it possible to easily realize a state in which the pixels 22 in the intra-medium region 20 and the pixels 23 in the extra-medium region 21 are distinguishable from each other.
(5) In the present embodiment, it is configured such that, before the binarization process, the pixels in the abnormality determination region 13 are set to the second color C2. By this, it reduces the risk of erroneous search due to dust or vertical streaks in searching for and identifying the positions of the one edge 24 and the other edge 25.
(6) In the present embodiment, it is configured such that if the one edge 24 and the other edge 25 include a separated edge 30 located apart from the downstream edge 132 of the abnormality determination region 13, a second-stage color unification process is performed to set all pixels 22 between the separated edge 30 and the one side edge 133 of the abnormality determination region 13 to the first color C1. By this, it can handle a transport posture in a state where either the left edge or the right edge of the medium 2 lies outside the abnormality determination region 13.
(7) In the present embodiment, the one edge 24 and the other edge 25 are formed in the abnormality determination region 13 based on the both end positions 31 and 32 of the leading edge 16 of the medium 2, and the color unification process is performed to set all the pixels 22 between the one edge 24 and the other edge 25 formed to the first color C1. By this, it is possible to handle the case where the medium 2 is thin sheet paper and accurately obtain the maximum distance WL and the maximum distance WR.

### OTHER EMBODIMENTS

The image reading device 1, the abnormality determination process program 12, and the abnormality determination method according to the present disclosure are fundamentally based on the configuration described in the foregoing embodiment. Nevertheless, it is naturally possible to make partial changes or omissions within a range that does not depart from the spirit of the present disclosure.

For example, in the first step of the abnormality determination process, the color unification process (process to place in a distinguishable state) may be performed in the X-direction between the one edge 24 and the other edge 25, and then the color unification process may be performed from the leading edge 16 (downstream end) of the medium toward the upstream end (for example, the upstream end in the intra-medium region 20 or the upstream edge 131). That is, the color unification process is performed in the X-direction and the Y-direction. In this way, the abnormality determination process can be executed by one process without performing a branching process depending on the thickness of the medium 2 or the like.

In the case where the color unification process is performed along the Y-direction in the above description, for example, when a part of the leading edge 16 does not exist in the abnormality determination region 13, a portion of the downstream edge 132 corresponding to a portion where a part of the leading edge 16 protrudes from the abnormality determination region 13 may be processed as the leading edge 16. In this way, even when the medium 2 does not fit within the abnormality determination region 13 due to skew or the like, the color unification process can be easily executed.

In the case where the color unification process is performed along the Y-direction in the above description, the color unification process may be performed from the one edge 24 or the other edge 25 toward the upstream edge in the -Y direction. In this way, even when the medium 2 is in a state of skew or the like, the color unification process can be easily executed.

In the first step of the abnormality determination process, for example, when either the one edge 24 and the other edge 25 is not present in the abnormality determination region 13, the one side edge 133 or the other side edge 134 of the abnormality determination region 13 on the side where the edge is not present may be regarded as an edge, and the color unification process may be performed in the X-direction. In this way, even when the medium 2 does not fit within the abnormality determination region 13 due to skew or the like, the color unification process can be easily executed.

The above-described embodiments may be combined as appropriate.

## Claims

1. An image reading device comprising:
a transport section that transports a medium along a transport path;
a read section that is provided in the transport path and that reads an image of the medium; and
a control section that processes read data read by the read section and that controls transport of the medium in the transport path, wherein
the control section is configured
to set an abnormality determination region for a leading edge region of a read image of the medium and
to perform an abnormality determination process on the abnormality determination region and
the abnormality determination process includes
a first step that involves processing pixels of the read data contained in the abnormality determination region into a state that allows distinction between pixels in an intra-medium region and pixels in an extra-medium region,
a second step that, after the first step, acquires a maximum distance WL from a center position in a medium width direction, which intersects a medium transport direction, to one edge, and a maximum distance WR from the center position to an other edge, and
a third step that involves comparing a value R with a predetermined threshold R1, the value R being either a ratio or a difference between the maximum distance WR and the maximum distance WL.

2. The image reading device according to claim 1, further comprising:
an edge identification step that performs a binarization process on pixels of the read data within the abnormality determination region and that identifies the one edge and the other edge, wherein
the first step defines, based on the one edge and the other edge identified in the edge identification step, an intra-medium region and an extra-medium region within the abnormality determination region.

3. The image reading device according to claim 2, wherein
the edge identification step performs the binarization process in the abnormality determination region by assigning a first color to read data pixels whose luminance difference is equal to or greater than a threshold R2 and a second color to pixels whose luminance difference is less than the threshold R2.

4. The image reading device according to claim 3, wherein
after binarization, the first step enables distinction by performing a color unification process in which all pixels between the one edge and the other edge in the abnormality determination region are set to the first color.

5. The image reading device according to claim 3, wherein
before the first step, the pixels in the abnormality determination region are set to the second color.

6. The image reading device according to claim 4, wherein
after the color unification process, if either the one edge or the other edge includes a separated edge that is located away from the downstream edge in the transport direction of the abnormality determination region, a second-stage color unification process is performed in which all pixels in the abnormality determination region that are between the separated edge and one side portion in the direction intersecting the transport direction are set to the first color.

7. The image reading device according to claim 3, wherein
the abnormality determination process
after the binarization process in the abnormality determination region, identifies the leading edge of the medium in the resulting image,
forms the one edge and the other edge at the respective both end positions of the leading edge, and
in the first step, achieves distinction by performing a color unification process in the abnormality determination region, in which all pixels between the formed the one edge and the other edge are set to the first color.

8. A non-transitory computer-readable storage medium storing a program, the program including an abnormality determination program executed in an image reading device, the image reading device having
a transport section that transports a medium along a transport path,
a read section that is provided in the transport path and that reads an image of the medium, and
a control section that processes read data read by the read section and that controls transport of the medium in the transport path, the abnormality determination program comprising:
setting an abnormality determination region for a leading edge region of a read image of the medium and
performing an abnormality determination process on the abnormality determination region, wherein
the abnormality determination process includes
a first step that involves processing pixels of the read data contained in the abnormality determination region into a state that allows distinction between pixels in an intra-medium region and pixels in an extra-medium region,
a second step that, after the first step, acquires a maximum distance WL from a center position in a medium width direction, which intersects a medium transport direction, to one edge, and a maximum distance WR from the center position to an other edge, and
a third step that involves comparing a value R with a predetermined threshold R1, the value R being either a ratio or a difference between the maximum distance WR and the maximum distance WL.

9. An abnormality determination method in an image reading device,
the image reading device including
a transport section that transports a medium along a transport path,
a read section that is provided in the transport path and that reads an image of the medium, and
a control section that processes read data read by the read section and that controls transport of the medium in the transport path,
the abnormality determination method in the image reading device comprising:
setting an abnormality determination region for a leading edge region of a read image of the medium and
performing an abnormality determination process on the abnormality determination region, wherein
the abnormality determination process includes
processing the pixels of the read data contained in the abnormality determination region into a state that allows distinction between pixels in an intra-medium region and pixels in an extra-medium region,
after a second step, acquiring a maximum distance WL from a center position in a medium width direction, which intersects a transport direction of the medium, to one edge, and the maximum distance WR from the center position to an other edge, and
comparing a value R with a predetermined threshold R1, the value R being either a ratio or a difference between the maximum distance WR and the maximum distance WL.
